# EUROPEAN PATENT SPECIFICATION

(11) **EP 4 136 343 B1**
(45) Date of publication and mention of the grant of the patent: **20.12.2023**
(21) Application number: 21728044.5
(22) Date of filing: 21.05.2021
(51) Int. Cl.: F03D 9/25, F03D 17/00

(54) **WIND TURBINE HAVING AN ELECTRICAL POWER GENERATION ASSEMBLY AND METHOD FOR DETECTING A FAULT CONDITION IN SUCH A WIND TURBINE**
WINDTURBINE MIT EINER ELEKTRISCHEN ENERGIEERZEUGUNGSANORDNUNG UND VERFAHREN ZUR ERKENNUNG EINES FEHLERZUSTANDS IN SOLCH EINER WINDTURBINE
ÉOLIENNE DOTÉE D'UN ENSEMBLE DE PRODUCTION D'ÉNERGIE ÉLECTRIQUE ET PROCÉDÉ DE DÉTECTION D'UNE CONDITION DE PANNE DANS UNE TELLE ÉOLIENNE

(30) Priority: 12.06.2020 EP 20179660
(43) Date of publication of application: 22.02.2023
(73) Proprietor: Siemens Gamesa Renewable Energy A/S, 7330 Brande (DK)
(72) Inventor: REIGNER, Kevin Fabrice Franck, 7330 Brande (DK); STEFFENSEN, Michael Bilet Skovgaard, 8361 Hasselager (DK)
(74) Representative: SGRE-Association
(86) International application number: PCT/EP2021/063603
(87) International publication number: WO 2021/249743

(56) References cited:
- EP-A1- 2 948 679
- EP-B1- 2 948 679
- US-A1- 2013 181 451

## Description

The invention concerns a wind turbine having an electrical power generation assembly and a control device for controlling the power generation assembly, wherein the electrical power generation assembly comprises a generator, at least one converter connected to the generator, and an overheating detection device. The invention further concerns a method for detecting a fault condition in a power generation assembly of such a wind turbine.

Wind turbines generally comprise at least two, usually three, wind turbines blades mounted to a hub. Wind energy causes this rotation assembly to rotate, such that electrical power can be generated from the rotation using a generator of an electrical power generation assembly of the wind turbine. Such a generator and, optionally, further components of the power generation assembly, can, for example, be housed in a nacelle, which is mounted rotatably on a tower of the wind turbine.

Usually, in the generator of a wind turbine, a three-phase alternating current is generated which may not be directly introduced into a power grid. Hence, power generation assemblies of wind turbines usually comprise one or more converters, to which the generator is connected. The at least one converter, which may also be called power conditioning circuit or power converter, adjusts the generator frequency and voltage to that of the grid.

The wind turbine may also comprise a control device for controlling and/or monitoring the power generation assembly, in particular performing smart control. It has already been proposed in the state of the art to use a temperature sensor, in particular a Pt100 sensor, on the hottest point of the generator to be able to protect generator segments and/or the generator as a whole against overheating. If, for example, a certain temperature is exceeded, an associated measure may be conducted by the control device, for example deactivating or disconnecting at least a subsystem of the generator or the like.

However, another problem which can occur in a power generation assembly of a wind turbine are thermal or other effects of phase unbalance. Such effects may, for example, occur if one or more electrical connections of a certain phase at least partly disconnect. This may, for example, be caused by loose bolts or other mounting/connection means. A resulting phase unbalance leads to overheating of the electrical connections, reducing the lifetime of the power generation assembly, causing damage and, in the worst case, even a fire. In the state of the art, in the field of motors, it has been proposed to provide motor protection relays which use fuses for each phase to protect from overcurrent. While this solution may also be applied to larger electrical machines, it induces an unbalance in the generator, which in turn causes strong vibrations.

As a concept for detecting thermal effects, in particular caused by phase unbalance, it may be proposed to use temperature sensors, for example Pt100 sensors, for each electrical connection between the generator and at least one converter to sense a temperature increase caused by an overload of the electrical connection. However, modern wind turbines usually use a large number of converters, for example twelve converters, such that in a common three-phase system, thirty-six connections would need to be monitored regarding their temperature. This would lead a large number of temperature sensors, a large amount of wiring and complex, computation-intensive evaluation of the measured temperatures, in summary to high effort and high cost.

An example of a prior art solution is known from US 2013/181451 A1.

It is an object of the current invention to provide an efficiently implementable, robust overheat monitoring in a power generation assembly of a wind turbine.

This object is achieved by providing a wind turbine according to claim 1 and a method according to claim 11. Advantageous embodiments are described by the dependent claims.

In a wind turbine as initially described, the overheating detection device comprises:
- at least two temperature sensing elements at different positions of the power generation assembly, wherein the temperature sensing elements are connected in series along a signal line to provide a common sensor signal and are each adapted to indicate the exceeding of a respective critical temperature at their position in the common sensor signal, and
- a detection unit for evaluating the common sensor signal, which is connected to the signal line.

The detection unit is preferably connected to the control device, such that the control device of the wind turbine may further evaluate the information provided by the detection unit. In particular, the detection unit or the control device of the wind turbine, to which the detection unit is connected, is adapted to execute at least one measure if an exceeding of at least one critical temperature is detected in the sensor signal. Such a measure may, for example, comprise outputting an alarm signal, in particular at an external, distant output device, for example at a manufacturer of the wind turbine and/or a maintenance service. Further, a measure may comprise deactivating and/or disconnecting at least a subsystem of the generator to protect the power generation assembly from damage and/or fire. However, in the most preferred application of the invention, namely detecting overheating by phase unbalance, an alarm signal as the only measure has proven sufficient, since actual concrete damage is not common, such that the fault condition, in this case overheating of at least one electrical connection, mainly leads to a reduction of the lifetime of the power generation assembly, which can be kept small if maintenance is performed swiftly.

The current invention is based on the idea that for certain monitoring purposes in a wind turbine, in particular phase unbalance-related overheating, it suffices to know that overheating is occurring at (an arbitrary) one of the positions to trigger certain measures, in particular notifying service staff that maintenance would be reasonable. In particular, a critical temperature may be assigned to each position, which may be similar or even equal for each position if the positions are equivalent, as is the case, for example, when electrical connections between generator and converter are monitored. A temperature sensing element is placed at each of the positions. These temperature sensing elements are all connected in series along a signal line, which is in turn connected to the detection unit which measures or reads the sensor signal. Each temperature sensing element has the property to modify the sensor signal detected by the detection unit if the temperature of the temperature sensing element exceeds the critical temperature at its position. In this manner, by connecting the temperature sensing elements in series, it is possible to detect if the temperature surpassed a critical temperature without having to use individual temperature sensors at each position. A simple installation is proposed which only results in one information provided to the control device, while, when using individual temperature sensors, a large amount of wiring and input modules for the control device would be needed.

In summary, the effort and cost of monitoring and in consequence protecting the power generation assembly, in particular its electrical connections, from fault conditions comprising overheating, is massively reduced, since only one input module, that is, one detection unit, is required for each generator. However, it is noted that, of course, multiple overheating detection devices may be used in a wind turbine, each having at least two temperature sensing elements connected in series along a signal line to a detection unit. Such multiple overheating detection devices may, for example, each be used for a subsystem of the at least one generator and/or for different generators employed. In an embodiment, each parallel path of each phase can be thermally monitored by connecting an equal number of temperature sensing elements in series connected to a single detection unit, thus, also in this case, reducing cost and effort in hardware and data storage.

Despite using only one detection circuitry, thermal effects, for example due to a phase unbalance, may be detected down to a singular position, in particular one single electrical disconnection event, which allows to service the wind turbine on time before any major incident occurs. That is, in the case of phase unbalance, the disconnection may be fixed without causing permanent damage to the power generation assembly, in particular the generator or the electrical connections between the generator and the at least one converter, by providing swift maintenance.

In a preferred and especially advantageous embodiment, the temperature sensing elements are PTC thermistors, wherein a transition temperature of the switching PTC thermistor is the critical temperature. PTC thermistors are resistors having a positive temperature coefficient (PTC), which means that the resistance increases with increasing temperature. In this case, switching type PTC thermistors are used. Such switching PTC thermistors have a transition temperature, which may also be called switching temperature or Curie temperature. The transition temperature is the temperature at which the resistance of switching type PTC thermistors starts to rise rapidly. PTC thermistors, which may be used in the current invention, can, for example, be made of poly-crystalline ceramic material such as barium titanate. Conductivity is, in this case, provided by dopants. In the state of the art, switching PTC thermistors having a transition temperature between 50° C and over 200° C are known.

The detection unit may then comprise a resistance measuring circuit for measuring the resistance of the temperature sensing elements along the signal line. For example, the voltage drop at constant electrical current may be measured, as in principle known in the state of the art. The measured resistance, as a result of the evaluation of the sensor signal, may be the information provided to the control device for further evaluation, however, in preferred embodiments, the detection unit is already adapted to detect a switching event of at least one of the switching PTC thermistors, by detecting the corresponding rise in electrical resistance.

In summary, PTC thermistors are connected in series to detect if overheating takes place at one or more positions of the power generation assembly, such that no individual temperature sensors are required. The increase in resistance may be used to detect the exceeding of at least one critical temperature and trigger certain measures, for example sending an alarm signal.

In a preferred application of the current invention, the power generation assembly may comprise phase connectors to connect the generator to the at least one converter, wherein a temperature sensing element is positioned at each phase connector. In particular, three phase connectors may be provided for each converter. As, usually, the power generation assembly may comprise multiple, for example six to fifteen, converters, a large number of phase connectors exist, which may, for example, be bus bars. For example, in a wind turbine having twelve converters, thirty-six connectors, each preferably implemented as a bus bar, may be used. In such an application, the critical temperature for each connector may be chosen in the interval of 90° C to 200° C, in particular 120° C to 150° C.

As already noted, multiple such overheating detection devices may be used for the phase connectors, but in preferred embodiments, one overheating detection device suffices. In particular, for a dedicated monitoring of the connectors, temperature sensing elements may only (exclusively) be used at the phase connectors of the power generation assembly.

However, further devices for gaining temperature information from, in particular, the generator, may of course additionally be used. For example, in an embodiment, the generator may further comprise, in particular at its hottest position, at least one temperature sensor, in particular a Pt100 sensor, for measuring a temperature value, wherein the temperature sensor is connected to the control device. In this manner, for example, smart control of the power generation assembly may be implemented.

The detection unit may comprise a box-like housing and may, in particular directly by a connector of the housing, be connected to the control device. For example, the detection unit may be directly plugged into a corresponding socket of the control device by using a plug as connector. It is noted that generally, the signal line may be implemented by any wire or, in particular, single-wired cable.

The invention further concerns a method for detecting a fault condition, in particular an overheating condition, in a power generation assembly of a wind turbine according to the invention, wherein the common sensor signal is evaluated in the detection unit and/or the control device and, if the common sensor signal indicates an exceeding of the critical temperature at at least one position of a temperature sensing element, at least one measure is executed by the control device. All features and comments regarding the wind turbine analogously apply to the method according to the invention, such that the same advantages can be achieved.

In particular, at least one of the at least one measure may comprise outputting an alarm signal to an external output device, in particular at a manufacturer of the wind turbine and/or a maintenance service. Additionally or alternatively, at least one of the at least one measure may comprise the activating and/or disconnecting of at least one subsystem of the generator, such that the generator and/or the electrical connections may be protected from thermal overloading. However, in the case of monitoring overheating at phase connectors between the generator and the at least one converter to detect thermal effects of phase unbalance, even a single disconnection event may be robustly detected such that an alarm signal suffices as a measure.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle drawing of a wind turbine according to the invention,
- Fig. 2: a schematical drawing of the electrical power generation assembly of the wind turbine, and
- Fig. 3: a resistance-temperature-diagram of a PTC thermistor.

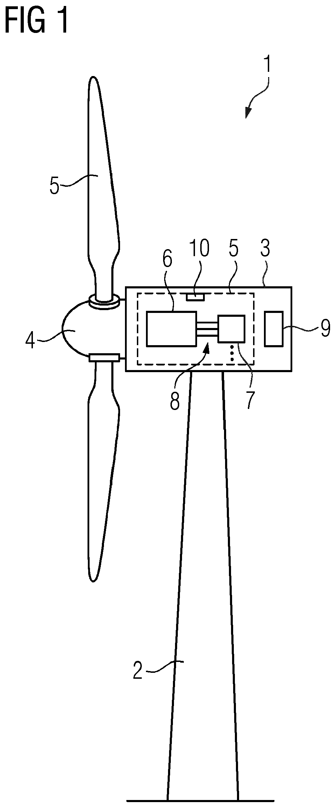

Fig. 1 is a principle drawing of a wind turbine 1 according to the invention. The wind turbine 1 comprises a tower 2 carrying a nacelle 3 with a hub 4, to which at least two wind turbine blades 5 are mounted. An electrical power generation assembly 5 is housed in the nacelle 3, which comprises a generator 6 and multiple converters 7, from which for reasons of clarity only one is shown in fig. 1. The generator 6 is connected to each of the converters 7 by three electrical connections 8, one for each of the three phases used. For example, the generator 6 may comprise subsystems which are connected to certain converters 7. In an example, the power generation assembly 5 may comprise twelve converters. The operation of the wind turbine 1, in particular also the power generation assembly 5, is controlled by a control device 9, sometimes called "controller".

The wind turbine 1 may be a direct drive wind turbine or may comprise a gear box housed in the nacelle 3.

In any case, the power generation assembly 5 further comprises an overheating detection device 10, which is used to monitor the electrical connections 8 with regard to thermal effects caused by phase unbalance, for example by disconnection of at least one electrical connection 8.

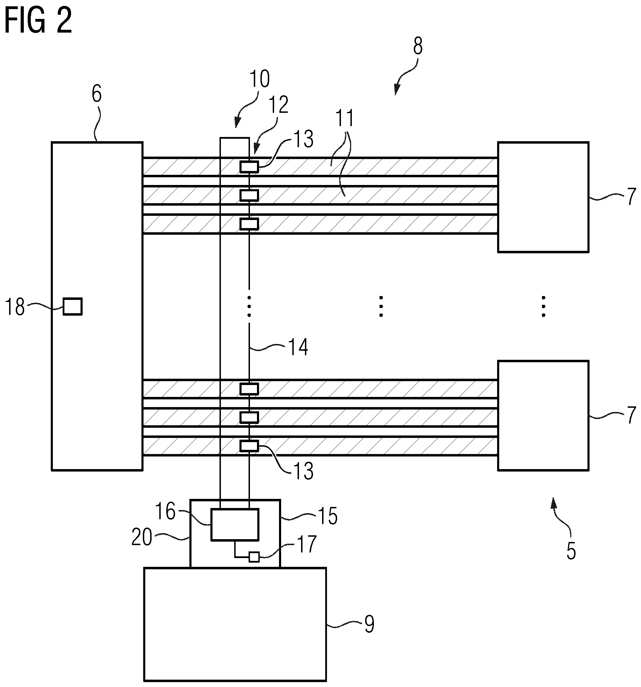

The overheating detection device 10 will be described in more detail with reference to fig. 2. As shown in fig. 2, the generator 6 is connected to the converters 7 by phase connectors 11, in this case bus bars. On each of the bus bars, a temperature sensing element 12, in this embodiment a PTC thermistor 13, is positioned.

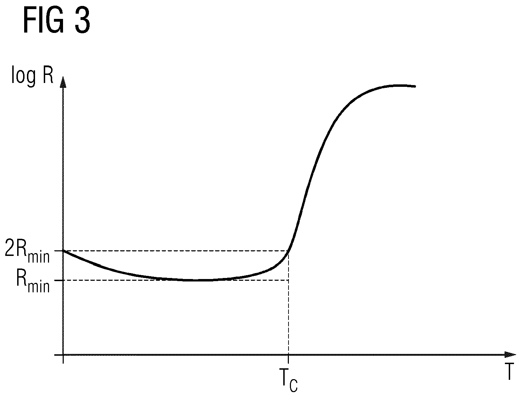

Fig. 3 shows a resistance-temperature-diagram for a PTC thermistor 13, wherein the resistance is shown on a logarithmic scale. As can be seen, the PTC thermistor 13 may have a slightly negative temperature coefficient up to a point of minimum resistance Rₘᵢₙ, from which point a slightly positive temperature coefficient occurs up to the transition temperature T_{c}. At this transition temperature, a steep rise of the resistance occurs. For example, the transition temperature may be defined as the temperature at which the resistance is twice the value of the minimum resistance, as exemplarily shown in fig. 3.

In this embodiment, the transition temperature, which is equivalent to a critical temperature for the phase connectors 11, is in the interval of 90° C to 200° C, for example 120° C or 150° C.

Consequently, if the temperature of a respective phase connector 11 rises above the transition temperature T_{c}, the resistance of the PTC thermistor switches to a very high value, such that such PTC thermistors are also called switching-type PTC thermistors or simply switching PTC thermistors 13.

As can be seen from fig. 2, the temperature sensing elements 12 are all connected in series along a signal line 14, which may be a simple wire or one-wire cable. The signal line 14 begins and ends at a detection unit 15, which comprises a resistance measuring circuit 16 for measuring the resistance along the signal line 14. For example, the voltage while enforcing constant current may be measured by the resistance measuring circuit. Obviously, if the critical temperature is exceeded for at least one of the PTC thermistors 13, the sensor signal along the signal line 14 will change, since the resistance along the whole signal line 14 will increase strongly. That is, all temperature sensing elements 12 share a common sensor signal, since the exact position where the critical temperature is exceeded is not required to be detected. In other words, the knowledge that overheating occurs at at least one of the phase connectors 11 is sufficient to conclude that a fault condition which requires maintenance is present.

The detection unit 15 may further comprise a microcontroller 17 for evaluating the common sensor signal, in this case processed to derive information which is then transmitted to connected control device 9. Such an overheating information may comprise the actually measured resistance, but in preferred cases is a binary overheating signal, indicating if overheating is present (high resistance, in particular surpassing a threshold value) or not (low resistance).

If overheating is detected, an alarm signal is output to an external, distant output device, such that an alarm may be output at, for example, a manufacturer of the wind turbine and/or a maintenance service.

The overheating detection device 10 thus allows early detection of at least one disconnection event, such that, usually, disconnecting and/or deactivating the generator 6 or at least one subsystem of the generator 6 is not necessary, since enough tine remains to resolve the fault condition, for example reconnect a disconnected phase connector 11.

It is noted that further thermal management may also be provided in the wind turbine 1, for example by using a temperature sensor 18, for example Pt100 sensor, at the hottest point of the generator 6 and possibly further positions. As can be seen, the overheating detection device 10 is restricted to the phase connectors 11. However, multiple overheating detection devices 10 for different subsets of phase connectors 11 may be provided, or even additional overheating detection devices 10 may be provided for other sets of positions and/or components of the power generation assembly 5.

Although the present invention has been described in detail with reference to the preferred embodiment, the present invention is not limited by the disclosed examples from which the skilled person is able to derive other variations without departing from the scope of the invention.

## Claims

1. Wind turbine (1) having an electrical power generation assembly (5) and a control device (9) for controlling the power generation assembly (5), the electrical power generation assembly (5) comprising a generator (6), at least one converter (7) connected to the generator (6), and an overheating detection device (10), the overheating detection device (10) comprises
- at least two temperature sensing elements (12) at different positions of the power generation assembly (5), wherein the temperature sensing elements (12) are connected in series along a signal line (14) to provide a common sensor signal and are each adapted to indicate the exceeding of a respective critical temperature at their position in the common sensor signal, and
- a detection unit (15) for evaluating the common sensor signal, which is connected to the signal line (14).

2. Wind turbine according to claim 1, **characterized in that** the detection unit (16) or the control device (9) of the wind turbine (1), to which the detection unit (15) is connected, is adapted to execute at least one measure if an exceeding of at least one of the critical temperatures is detected in the common sensor signal.

3. Wind turbine according to claim 1 or 2, **characterized in that** the temperature sensing elements (12) are PTC thermistors (13), wherein a transition temperature of the switching PTC thermistor (13) is the critical temperature.

4. Wind turbine according to claim 3, **characterized in that** the detection unit (15) comprises a resistance measuring circuit (16) for measuring the resistance of the temperature sensing elements (12) along the signal line (14).

5. Wind turbine according to one of the preceding claims, **characterized in that** the power generation assembly (5) comprises phase connectors (11) to connect to the at least one converter (7), wherein a temperature sensing element (12) is positioned at each phase connector (11).

6. Wind turbine according to claim 5, **characterized in that** three phase connectors (11) are provided for each converter (7) (7) and/or the power generation assembly (5) comprises multiple, in particular 6 to 15, converters (7).

7. Wind turbine according to claim 5 or 6, **characterized in that** the critical temperature for each connector (11) is 90° C to 200° C.

8. Wind turbine according to any of the claims 5 to 7, **characterized in that** the connectors (11) are bus bars.

9. Wind turbine according to one of the preceding claims, **characterized in that** the generator (6) further comprises, in particular at its hottest position, at least one temperature sensor (18), in particular a Pt100 sensor, for measuring a temperature value, wherein the temperature sensor (18) is connected to the control device (9).

10. Wind turbine according to one of the preceding claims, **characterized in that** the detection unit (15) comprises a box-like housing (20) and is, in particular directly by a connector of the housing (20), connected to the control device (9).

11. Method for detecting a fault condition in a power generation assembly (5) of a wind turbine according to one of the preceding claims, wherein the common sensor signal is evaluated at least in the detection unit (15) and, if the common sensor signal indicates an exceeding of the critical temperature at at least one position of a temperature sensing element, at least one measure is executed by the detection unit (15) and/or the control device (9).

12. Method according to claim 11, **characterized in that** at least one of the at least one measure comprises outputting an alarm signal to an external output device, in particular at a manufacturer of the wind turbine (1) and/or a maintenance service.

13. Method according to claim 11 or 12, **characterized in that** at least one of the at least one measure comprises deactivating and/or disconnecting at least a subsystem of the generator (6).

## Patentansprüche

1. Windturbine (1) mit einer elektrischen Energieerzeugungsanordnung (5) und einer Steuervorrichtung (9) zur Steuerung der Energieerzeugungsanordnung (5), wobei die elektrische Energieerzeugungsanordnung (5) einen Generator (6), mindestens einen mit dem Generator (6) verbundenen Umrichter (7) und eine Überhitzungserfassungsvorrichtung (10) umfasst, wobei die Überhitzungserfassungsvorrichtung (10) Folgendes umfasst:
- mindestens zwei Temperatursensorelemente (12) an verschiedenen Positionen der Energieerzeugungsanordnung (5), wobei die Temperatursensorelemente (12) entlang einer Signalleitung (14) in Reihe geschaltet sind, um ein gemeinsames Sensorsignal bereitzustellen, und jeweils dazu ausgelegt sind, das Überschreiten einer jeweiligen kritischen Temperatur an ihrer Position in dem gemeinsamen Sensorsignal anzuzeigen, und
- eine Erfassungseinheit (15) zur Auswertung des gemeinsamen Sensorsignals, die mit der Signalleitung (14) verbunden ist.

2. Windturbine nach Anspruch 1, **dadurch gekennzeichnet, dass** die Erfassungseinheit (16) oder die Steuervorrichtung (9) der Windturbine (1), mit der die Erfassungseinheit (15) verbunden ist, geeignet ist, mindestens eine Maßnahme durchzuführen, wenn eine Überschreitung mindestens einer der kritischen Temperaturen im gemeinsamen Sensorsignal erkannt wird.

3. Windturbine nach Anspruch 1 oder 2, **dadurch gekennzeichnet, dass** die Temperatursensorelemente (12) Kaltleiter (13) sind, wobei eine Übergangstemperatur des schaltenden Kaltleiters (13) die kritische Temperatur ist.

4. Windturbine nach Anspruch 3, **dadurch gekennzeichnet, dass** die Erfassungseinheit (15) eine Widerstandsmessschaltung (16) zur Messung des Widerstands der Temperatursensorelemente (12) entlang der Signalleitung (14) umfasst.

5. Windturbine nach einem der vorhergehenden Ansprüche, **dadurch gekennzeichnet, dass** die Energieerzeugungsanordnung (5) Phasenverbinder (11) zum Anschluss an den mindestens einen Umrichter (7) umfasst, wobei an jedem Phasenverbinder (11) ein Temperatursensorelement (12) angeordnet ist.

6. Windturbine nach Anspruch 5, **dadurch gekennzeichnet, dass** für jeden Umrichter (7) drei Phasenverbinder (11) vorgesehen sind und/oder die Energieerzeugungsanordnung (5) mehrere, insbesondere 6 bis 15, Umrichter (7) umfasst.

7. Windturbine nach Anspruch 5 oder 6, **dadurch gekennzeichnet, dass** die kritische Temperatur für jeden Verbinder (11) 90 °C bis 200 °C beträgt.

8. Windturbine nach einem der Ansprüche 5 bis 7, **dadurch gekennzeichnet, dass** die Verbinder (11) Sammelschienen sind.

9. Windturbine nach einem der vorhergehenden Ansprüche, **dadurch gekennzeichnet, dass** der Generator (6) ferner, insbesondere an seiner heißesten Stelle, mindestens einen Temperatursensor (18), insbesondere einen Pt100-Sensor, zur Messung eines Temperaturwertes aufweist, wobei der Temperatursensor (18) mit der Steuervorrichtung (9) verbunden ist.

10. Windturbine nach einem der vorhergehenden Ansprüche, **dadurch gekennzeichnet, dass** die Erfassungseinheit (15) ein kastenförmiges Gehäuse (20) umfasst und insbesondere unmittelbar über einen Verbinder des Gehäuses (20) mit der Steuervorrichtung (9) verbunden ist.

11. Verfahren zur Erkennung eines Fehlerzustands in einer Energieerzeugungsanordnung (5) einer Windturbine nach einem der vorhergehenden Ansprüche, wobei das gemeinsame Sensorsignal zumindest in der Erfassungseinheit (15) ausgewertet wird und, wenn das gemeinsame Sensorsignal eine Überschreitung der kritischen Temperatur an zumindest einer Stelle eines Temperatursensorelements anzeigt, zumindest eine Maßnahme durch die Erfassungseinheit (15) und/oder die Steuervorrichtung (9) durchgeführt wird.

12. Verfahren nach Anspruch 11, **dadurch gekennzeichnet, dass** mindestens eine der mindestens einen Maßnahme die Ausgabe eines Alarmsignals an eine externe Ausgabevorrichtung, insbesondere an einen Hersteller der Windturbine (1) und/oder einen Wartungsdienst, umfasst.

13. Verfahren nach Anspruch 11 oder 12, **dadurch gekennzeichnet, dass** mindestens eine der mindestens einen Maßnahme das Deaktivieren und/oder Abkoppeln mindestens eines Subsystems des Generators (6) umfasst.

## Revendications

1. Éolienne (1) dotée d'un ensemble de production d'énergie électrique (5) et un dispositif de commande (9) pour commander l'ensemble de production d'énergie électrique (5), l'ensemble de production d'énergie électrique (5) comprenant un générateur (6), au moins un convertisseur (7) connecté au générateur (6) et un dispositif de détection de surchauffe (10), le dispositif de détection de surchauffe (10) comprend
- au moins deux éléments de détection de température (12) à différentes positions de l'ensemble de production d'énergie (5), les éléments de détection de température (12) étant connectés en série le long d'une ligne de signal (14) pour fournir un signal du capteur commun et étant chacun adaptés pour indiquer le dépassement d'une température critique respective à leur position dans le signal du capteur commun, et
- une unité de détection (15) pour évaluer le signal du capteur commun, qui est connectée à la ligne de signal (14).

2. Éolienne selon la revendication 1, **caractérisée en ce que** l'unité de détection (16) ou le dispositif de commande (9) de l'éolienne (1), auquel l'unité de détection (15) est reliée, est adapté pour exécuter au moins une mesure si un dépassement d'au moins une des températures critiques est détecté dans le signal du capteur commun.

3. Éolienne selon la revendication 1 ou 2, **caractérisée** en que les éléments de détection de température (12) sont des thermistances PTC (13), dans laquelle une température de transition de la thermistance PTC de commutation (13) est la température critique.

4. Éolienne selon la revendication 3, **caractérisée en ce que** l'unité de détection (15) comprend un circuit de mesure de résistance (16) pour mesurer la résistance des éléments de détection de température (12) le long de la ligne de signal (14).

5. Éolienne selon l'une des revendications précédentes, **caractérisée en ce que** l'ensemble de production d'énergie (5) comprend des connecteurs de phase (11) à connecter au au moins un convertisseur (7), dans laquelle un élément de détection de température (12) est positionné au niveau de chaque connecteur de phase (11).

6. Éolienne selon la revendication 5, **caractérisée en ce que** trois connecteurs de phase (11) sont prévus pour chaque convertisseur (7) et/ou l'ensemble de production d'énergie (5) comprend plusieurs, notamment 6 à 15, convertisseurs (7).

7. Éolienne selon la revendication 5 ou 6, **caractérisée en ce que** la température critique pour chaque connecteur (11) est de 90°C à 200°C.

8. Éolienne selon l'une quelconque des revendications 5 à 7, **caractérisée en ce que** les connecteurs (11) sont des barres omnibus.

9. Éolienne selon l'une des revendications précédentes, **caractérisée en ce que** le générateur (6) comprend en outre, notamment à sa position la plus chaude, au moins un capteur de température (18), notamment un capteur Pt100, pour mesurer une valeur de température, dans laquelle le capteur de température (18) est relié au dispositif de commande (9).

10. Éolienne selon l'une des revendications précédentes, **caractérisée en ce que** l'unité de détection (15) comprend un boîtier (20) en forme de boîte et est reliée, notamment directement par un connecteur du boîtier (20), au dispositif de commande (9).

11. Procédé de détection d'une condition de panne dans un ensemble de production d'énergie (5) d'une éolienne selon l'une des revendications précédentes, dans lequel le signal du capteur commun est évalué au moins dans l'unité de détection (15) et, si le signal du capteur commun indique un dépassement de la température critique à au moins une position d'un élément de détection de température, au moins une mesure est exécutée par l'unité de détection (15) et/ou le dispositif de commande (9).

12. Procédé selon la revendication 11, **caractérisé en ce qu'**au moins une de la au moins une mesure comprend l'émission d'un signal d'alarme vers un dispositif de sortie externe, notamment chez un fabricant de l'éolienne (1) et/ou un service de maintenance.

13. Procédé selon la revendication 11 ou 12, **caractérisé en ce qu'**au moins une de la au moins une mesure comprend la désactivation et/ou la déconnexion d'au moins un sous-système du générateur (6).
